# EUROPEAN PATENT APPLICATION

(11) **EP 3 387 913 A1**
(43) Date of publication of application: **17.10.2018**
(21) Application number: 17166065.7
(22) Date of filing: 11.04.2017
(51) Int. Cl.: A23J 3/22, A23J 3/26, A23J 3/14, A23L 7/10, A23L 7/117, A23L 33/185, A23L 33/21

(54) **READY-TO-EAT TEXTURIZED PROTEIN PRODUCT**

(71) Applicant: Gold&Green Foods Oy, 00100 Helsinki (FI)
(72) Inventor: KIVELÄ, Reetta, 00210 Helsinki (FI); JIANG, Zhong-Qing, 00620 Helsinki (FI); SILVÉN, Maria, 00140 Helsinki (FI)
(74) Representative: Berggren Oy, Turku

(57) **Abstract**

The invention relates to a ready-to-eat texturized protein product, which is prepared from legume material comprising legume protein and cereal material comprising bran and cereal protein, excluding wheat. The product comprises parallelly aligned fibres and has a moisture content ≤ 45 weight-%. Furthermore, the product comprises at least 25 weight-% of protein originating from legume material and cereal material, and at most 55 weight-% of carbohydrates, calculated from the total dry mass of the product.

## Description

The present invention relates to a ready-to-eat texturized protein product according to the preamble of the enclosed independent claim.

Recently consumers have been showing a growing interest in sustainable and healthy diet. Among other things, this has led to an increase in plant based products that can be used in a balanced daily diet. In order to gain a wide acceptance among mainstream consumers the plant based products should be not only healthy but also easy to use and provide an appealing and pleasant taste and mouth-feel.

There exists already a number of plant based products that can be used in warm dishes and main courses for example as meat substitutes. However, there is a demand also for ready-to-eat products, such as snacks, which can be eaten at the office, in the school or during leisure activities or physical training. It would be advantageous if these ready-to-eat products should also be able to provide a source for necessary proteins and nutrients for the consumer. An existing possibility is beef jerky or other products based on dried meat. These dried meat products may have a high protein content, but they are often very high in sodium and animal fats, and thus not necessarily a healthy option. Furthermore, for consumers concerned with ethical and/or ecological problems relating to meat production these dried meat based products are not an alternative. The plant-based ready-to-eat products are often in style of crisps or other deep-fried potato snacks, which are relatively unhealthy, high in calories and low in nutrients. In view of the increasing health consciousness of the consumers, increasing interest in plant-based products and increasing questions relating to food safety of meat, there is a need for new types of vegetarian ready-to-eat products that are able to provide a source rich in protein, nutrients and having a pleasant mouth-feel, which resembles more traditional beef jerky than traditional potato based snacks.

An object of the present invention is to minimise or even eliminate the disadvantages existing in the prior art.

An object of the invention is also to provide a ready-to-eat texturized protein product, which is rich in proteins, nutrients and/or micronutrients.

Another object of the invention is to provide a texturized protein product, which provides enhanced mouth-feel and appearance.

These objects are attained with the invention having the characteristics presented below in the characterising part of the independent claim. Some of the preferred embodiments of the invention are disclosed in the dependent claims.

Typical ready-to-eat texturized protein product according to the present invention
- is prepared from legume material comprising legume protein and cereal material comprising bran and cereal protein, excluding wheat,
- comprises parallelly aligned fibres,
- has a moisture content ≤ 45 weight-%, and
- comprises at least 25 weight-% of protein originating from legume material and cereal material, and at most 55 weight-% of carbohydrates, calculated from the total dry mass of the product.

Now it has been surprisingly found out that a texturized protein product prepared from legume material and cereal material and comprising parallelly aligned fibres is able to provide pleasant sensory feeling while being high in protein and nutrients. The texturized protein product is ready-to-eat and can be used to replace beef jerky, potato based snacks and other similar products. It is able to provide a valuable source of nutrition in present hectic environment, where there is not always time to prepare or consume meals.

In the present context "texturized protein product" is understood as solid fibrous product, which is produced from cereal material and legume material by cooking the starting materials in an extruder cooker and extruding them to form a texturized food product. Suitable production processes are disclosed e.g. in patent applications EP 15190251.7 and PCT/EP2016/074556.

In the present context the term "ready-to-eat" means that the texturized protein product is ready to be consumed without any preparation requiring heat, pressure, chopping and/or moisturizing. The product is thus suitable for human consumption without heating, cooking, frying or boiling.

The ready-to-eat texturized protein product comprises parallelly aligned fibres, which are formed during the manufacturing process from the used raw materials, i.e. legume material and cereal material. The individual fibres of the product may have a thickness in the range of 5 - 35 µm. The length of the individual fibres is at least partially dependent on the size of the product particles and may be in the range of 35 - 40 000 µm. It is not required that all the fibres in the product are strictly parallel with each other. Preferably a majority of the fibres are at least partially parallelly aligned, for example at least more than 50 % of the fibres are at least partially parallelly aligned. The fibre orientation may be measured by taking an arbitrary sample of the product and then visually assessing the directions of the fibres. The fibre orientation may also be assessed by using an imagining system, such as micro-computed tomography scanner. The fibre orientation provides the product with desired mouth-feel and biting resistance.

The resistance force corresponding to bite resistance that is required to break down the structure of the textured product can be described by using of the peak positive force values. According to one preferable embodiment of the present invention the product has a first peak positive force value, which is measured perpendicular to the length direction of the fibres, and a second peak positive force value, which is measured parallel to the length direction of the fibres, the first peak positive force value being larger than the second peak positive force value. These peak positive force values indicates similar structure and feel as beef jerky, providing a clear difference to conventional plant-based snacks, such as potato crisps.

The ratio of the second peak positive force value to the first peak positive force value may be in the range of 20 - 95 %, preferably 30 - 90 %, more preferably 40 - 85 %. This provides a pleasant biting experience, without making the product gum-like or too chewy. The first peak positive force value may be, for example, in the range of 2000 - 8000 g, preferably 2500 - 7000 g, more preferably 3500 - 6000 g, and/or the second peak positive force may be in the range of 1000 - 5000 g, preferably 1500 - 4000 g, more preferably 2400 - 3500 g.

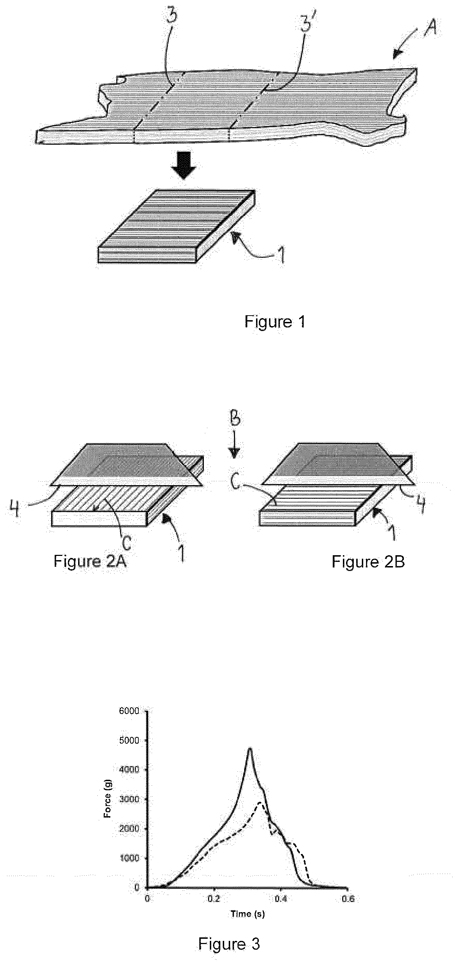

The peak positive force values may be measured as follows by using a Texture Analyzer equipped with a 98.1 N (10 kg) load cell (detector sensor) and a sharp knife blade. Before conducting a measurement, the product is cut into a square shape, i.e. rectangular shape having an equal length of the first and the third dimension. This means that the test shape has equal length and width. The second dimension, i.e. thickness, is unmodified. Figure 1 illustrates how a measurement sample 1 is cut from a product A. The dashed lines 3, 3' indicate the cutting lines.

Two measurements for each product are performed. The first measurement is made in the first direction, i.e. perpendicular to the length direction of the fibres, which means that the measurement sample is then placed under a knife blade so that the fibre direction in the sample is perpendicular to the knife blade. The second measurement is made in the second direction, i.e. parallel to the length direction of the fibres, which means that the measurement sample is then placed under a knife blade so that the fibre direction in the sample is parallel the knife blade. In all measurements the sample is placed horizontally on a flat platform, which means that the fibre direction is essentially horizontal. Figures 2A and 2B illustrate how the compression test is conducted. Figure 2A shows the measurement in the first direction where the fibre direction C of the sample 1 is placed in perpendicular to the knife blade 4. Figure 2B shows the measurement in the second direction where the fibre direction C sample 1 is placed in parallel to the knife blade 4. In the beginning of the test the knife blade 4 is above the sample 1, and moves straight downwards in direction of arrow B.

In the measurement a knife blade is compressed, i.e. cut, in vertical direction into the sample. The downward speed of the blade before it touches the sample is 5.0 mm/s, which is denoted as pre-test speed. The speed of compression after the blade has touched the sample is 20.0 mm/s (test speed), and compression is continued to a cutting depth until 99.9 % of the height of the sample is reached.

The resistance force value during the downward compression is measured. The resistance force value is zero until the blade touches the surface of the sample. Then the resistance force value starts to increase. Then there is a period when the resistance force mostly increases, with or without any possible short periodical decrease. This period is regarded as major deforming period. At the end of the major deforming period, the resistance force reaches the highest possible value during the measurement, which is taken as the peak positive force value for the sample. After that the resistance force starts to decrease immediately. The decrease is rapid in the first 0.05 s. There may be a second period when the resistance force value starts to increase again shortly or reach a plateau, however, the resistance mainly decreases towards zero value. The decrease after the major deforming period indicates that the structure of the sample is mostly deformed and the internal network of fibres is broken.

The ready-to-eat texturized protein product is prepared from legume material, which comprises legume protein. The texturized protein product may comprise legume material in amount of 28 - 60 weight-%, preferably 30 - 55 weight-%, more preferably 36 - 47 weight-%, calculated from the total dry mass of the product. Legume material encompasses both legume material, e.g. legume powder or flour, which contains natural amounts of legume protein, as well as legume material to which has been added isolated legume protein and which contains elevated amounts of legume protein. Suitable legume material is, for example, plants from the family *Fabaceae* (or *Leguminosae*)*,* or the fruits or seeds of such a plant. Suitable legume material include alfalfa, clover, different species of peas, different species of beans, different species of vicia fabas, lentils, lupins, mesquite, carob, peanuts and tamarind. Preferably legume material is selected from species of peas and vicia fabas, most preferably from species of vicia faba. According to one preferable embodiment the legume material is free from soybeans, soy protein and any soy-based material.

In addition of legume material the ready-to-eat texturized protein product is prepared from cereal material, which comprises bran and cereal protein. Bran may originate from the use of whole grain material or it may originate from bran fraction separated from whole grain. Cereal protein may be present as natural protein or fractionated cereal protein. In the present context the term "cereal" denotes generally grains from grasses of family Poaceae, excluding wheat. The whole grains of a cereal comprise endosperm, germ and bran. Examples of cereals suitable for the present invention are oat, barley, rye, rice, corn and any mixture thereof. The cereal material may, in addition to bran and protein, comprise all different kinds of fractions obtainable by processing, such as separation, fractionation, isolation and/or milling, of cereals. The ready-to-eat texturized protein product may be produced from cereal material comprising whole grain material, bran, fractionated cereal protein, processed or unprocessed endosperm isolated from the grain and any mixtures thereof. Cereal material may thus encompass a mixture of said materials, for example, a mixture of whole grain material and isolated cereal protein. The ready-to-eat texturized protein product may comprise cereal material in amount of 15 - 40 weight-%, preferably 20 - 25 weight-%, calculated from the total dry mass of the product.

Cereal material preferably comprises a large portion of whole grain material, which is obtained by milling whole grains of cereal, or processed or unprocessed bran isolated from the grain. According to one embodiment of the invention the texturized protein product may comprise bran or whole grain material in amount of 15 - 35 weight-%, preferably 17 - 22 weight-%, calculated from the total dry mass of the product. It has been observed that the whole grain material and/or bran improve the texture and mouth-feel of the product. At the same time the whole grain material and/or bran provides advantageous nutrients and dietary fibre to the product.

According to one preferable embodiment of the invention the cereal material comprises material from oat, barley, rye or any mixtures thereof. Preferably cereal material comprises at least 50 weight-%, more preferably at least 85 weight-%, of oat material, calculated from the total weight of the cereal material. According to one preferred embodiment the cereal material consists solely of oat. Oat provides not only a good texture but it is also a source for beta-glucan. Furthermore, oat as such provides a protein content of 12 - 23 weight-%, which makes it a good protein source. In addition, oat contains high levels, even more than animal proteins, of sulfuric acid, i.e. mainly cysteine, per protein. which is related, among others, to good bone health.

According to one embodiment of the invention the ready-to-eat texturized protein product comprises dietary fibre in amount of 2 - 15 g, preferably 2.5 - 12g, more preferably 3 - 10 g, and/or beta-glucan in amount of 1 - 5 g, preferably 1.2 - 3.8 g, most preferably 1.5 g - 3.2 g, given per 100 g of dry product. In the present context the term "dietary fibre" is understood as carbohydrate polymers with three or more monomeric units, which are neither digested nor absorbed in the human small intestine and which belong to one of the following categories: edible carbohydrate polymers naturally occurring in the food as consumed; edible carbohydrate polymers which have been obtained from food raw material by physical, enzymatic, or chemical means and which have a beneficial physiological effect demonstrated by generally accepted scientific evidence; edible synthetic carbohydrate polymers which have beneficial physiological effect demonstrated by generally accepted scientific evidence (See "COMMISSION DIRECTIVE 2008/100/EC" ANNEX II).

The ready-to-eat texturized protein product comprises at least 25 weight-% of protein originating from legume material and cereal material, calculated from the total dry mass of the product. In this manner the product provides a source rich in proteins, which makes it suitable for variety of consumers leading physical active lifestyles, such as hikers, joggers or the like. According to one embodiment of the invention the product comprises preferably 25 - 65 weight-%, more preferably 30 - 55 weight-%, even more preferably 32 - 52 weight-%, of protein originating from legume material and cereal material, measured by dry weight of the product.

Main part of the protein in the product may originate from the legume material. The ready-to-eat texturized protein product may comprise 21 - 53 weight-%, preferably 26 - 43 weight-%, of protein originating from legume material, and 3 - 13 weight-%, more preferably 6 - 9 weight-%, of protein originating from cereal material, given per 100 g of dry product.

The ready-to-eat texturized protein product comprises at most 55 weight-% of carbohydrates, calculated from the total dry mass of the product. The product may comprise 18 - 55 weight-%, preferably 20 - 48 weight-%, more preferably 22 - 45 weight-%, of carbohydrates, measured by dry weight of the product. Thus the product may also provide a valuable source of energy, e.g. during physical exercise.

The ready-to-eat texturized protein product has a moisture content ≤ 45 weight-%, which improves the storage properties of the product. The product may be stored at room temperature for prolonged periods of time without adverse effects on taste, texture or microbiological safety. According to one preferable embodiment the texturized protein product has a moisture content in the range of 7 - 45 weight-%, preferably 10 - 40 weight-%, more preferably 15 - 35 weight-%, even more preferably 18 - 33 weight-%.

Water activity of a food denotes the water that is not bound to food molecules but can support the growth of bacteria, moulds, yeasts and fungi. The water activity is the ratio between the vapour pressure of the food itself, when in a completely undisturbed balance with the surrounding air media, and the vapour pressure of distilled water under identical conditions. The ready-to-eat texturized protein product may have a water activity in the range of 0.44 - 0.90, preferably 0.50 - 0.87, more preferably 0.57 - 0.83. This means that the product has a good microbial stability and long shelf life.

The ready-to-eat texturized protein product may have a shape, which has a first dimension, i.e. length, and a second dimension, i.e. thickness, which are perpendicular to each other, the first dimension being larger than the second dimension. Preferably the first dimension is at least 2 times, preferably at least 4 times, more preferably at least 4.5 times, larger than the second dimension. The shape of the product may be freely selected. For example, the product may be flat and elongated or cylindrical or oval or star-shaped. Preferably the product is flat.

The fibres in the product are preferably mainly aligned parallel to the first dimension. This means that the fibres are mainly aligned along the length axis of the product. In case the product has no clear length axis, e.g. the product is flat and star-shaped, the fibres are mainly parallel with each other and aligned from the first side edge of the product to the opposite second side edge of the product. It has been observed that the alignment of the fibres along the first dimension provides good mouth-feel and biting experience.

The dimensions of the product may be optimized for eating with fingers and to avoid danger of suffocation, even if served to children or elderly. According to one embodiment of the invention the ready-to-eat texturized protein product has the first dimension, which is in the range 2 - 6 cm, preferably 2.5 - 5 cm, more preferably 3 - 4 cm, and/or the second dimension, which is in the range 0.1 - 0.8 cm, preferably 0.2 - 0.7 cm, more preferably 0.3 - 0.6 cm. Furthermore, the product may have a third dimension, i.e. width, which is perpendicular to the first and the second dimension and which is in the range which is in the range 0.8 - 3.5 cm, preferably 1 - 3 cm, more preferably 1.5 - 2 cm.

The ready-to-eat texturized protein product may further comprises 5 - 40 weight-%, preferably 7 - 34 weight-%, more preferably 9 - 28 weight-%, of lipids, measured by dry weight of the product. Lipids may be defined as total lipid fatty acids expressed as triglycerides, and they can be measured according to a standard method "NMKL 181, 2005". These lipids are preferably plant-based lipids. According to one embodiment of the invention the texturized protein product may comprise vegetable oil, such as rape seed oil, sun flower oil, olive oil or any mixture thereof.

According to one embodiment the ready-to-eat texturized protein product may comprise selenium in amount of 10 - 200 µg, preferably 12 - 150 µg, more preferably 15 - 100 µg; and/or Vitamin E in amount of 1 - 5 mg, preferably 1.5 - 3 mg, more preferably 1.8 - 2.6 mg; and/or folic acid in amount of 5 - 100 µg, preferably 10 - 60 µg, more preferably 15 - 50 µg; and/or Vitamin K1 in amount of 10 - 30 µg, preferably 12 - 25 µg, more preferably 15 - 22 µg; given per 100 g dry product. These values provide a balanced composition of necessary nutrients in the protein product. Furthermore, the product may provide a valuable source of nutrients for special consumer groups, e.g. pregnant women, who are in substantial need of specific nutrients, such as folic acid.

Furthermore, the ready-to-eat texturized protein product may comprise potassium in amount of 400 - 2800 mg, preferably 500 - 1800 mg, more preferably 700 - 1200 mg, and/or magnesium in amount of 100 - 550 mg, preferably 150 - 300 mg, more preferably 180 - 220 mg, given per 100 g of dry product. For example, the magnesium amount in the protein product provides necessary supply of magnesium for physically active persons.

The texturized protein product may further comprise zinc in amount of 1 - 20 mg, preferably 3 - 15 mg, more preferably 4 - 10 mg; phosphorus in the amount of 400 - 2500 mg, preferably 500 - 2000 mg, more preferably 650 - 1500 mg; and/or iron in the amount of 5 - 16 mg, preferably 6 - 14 mg, more preferably 7 - 12 mg, given per 100 g dry product.

According to one preferable embodiment of the invention the texturized protein product comprises flavour component originating from fruit and/or vegetable juice and/or fruit and/or vegetable pulp, preferably in amount (dry weight) of 4 - 40 g, more 8 - 35 g, more preferably 9 - 30 g, given per 100 g of dry product. The juice or pulp may be added to the product during the manufacture, whereby the water and moisture is evaporated during the process. The selection of the flavour component naturally influences the flavour of the final product, but also its nutrient content. For example, use of vegetable juice or pulp which is high in Vitamin E as a flavour component increases the Vitamin E content of the final product. By proper selection of the flavour components it is possible to tailor the nutrient content of the product while making the product pleasant in taste and/or colour. Suitable flavour components may be beetroot juice, beetroot powder, coconut powder, coconut cream, lemon juice concentrate, lime juice concentrate, sundried tomato powder, tomato juice concentrate, and all combinations thereof.

According to one preferable embodiment the ready-to-eat texturized protein product is completely free from animal-based constituents, such as animal fat, milk and blood. This makes the product suitable for all consumer groups, irrespective for their religious and/or ethical beliefs. This means that there is no need to modify the basic recipe of the product depending on the specific market segment requirements.

Some embodiments of the invention are more closely disclosed in the following non-limiting examples.

### EXAMPLE 1

A raw material mixture comprising oat bran, oat protein fraction, vicia faba protein concentrate and pea protein isolate was mixed with water. The amount of cereal material was around 40 weight-% and the amount of legume material 60 weight-%.

Obtained mixture was processed in an extruder according to process disclosed in patent application EP 15190251.7. The temperature profile during processing was 60 °C → 175 °C → 130 °C. The process produced extruded pieces comprised 58 weight-% protein (dry weight). It was concluded that the 100 g of the dry pieces comprised 13 g protein originating from oat, 44 g proteins originating from legume material.

After extrusion, liquid was added to adjust the moisture content of the extruded pieces to 50%. The liquid contained beetroot juice concentrate. The dry weight of the beetroot juice concentrate was equal to 20% dry weight of the extruded semi products.

The produced pieces were then dried in oven at 100 °C until the moisture content of decreased to 30 %.

After drying oil, spices and salt was sprayed on the surface of the pieces and gently mixed. The pieces were ready for packaging and storage.

Peak positive force values were measured for the obtained product, by using the method described elsewhere in this application. Figure 3 shows a diagram displaying measurement results for measurement of resistance force vs. penetration time during the compression test. The solid line shows the result of measurement conducted in the first direction, i.e. perpendicular to the length direction of the fibres. The dashed lines shows the results of measurement conducted in the second direction, i.e. parallel to the length direction of the fibres.

The nutritional composition of the obtained product is given in Table 1.

| | Amount, given per 100 g dry product |
|---|---|
| Phosphorus P, (mg) | 714 |
| Potassium K, (mg) | 1097 |
| Magnesium Mg, (mg) | 191 |
| Iron Fe, (mg) | 9 |
| Selenium, Se (µg) | 20 |
| Zinc Zn, (mg) | 5.2 |
| Protein, (g) | 38 |
| Carbohydrates, (g) | 37 |
| Iodine, (µg) | 13 |
| Vitamin E, (mg) | 2.4 |
| Vitamin K1, (µg) | 19.8 |
| B9-folic acid, (µg) | 22 |
| Dietary fibre, (g) | 8 |

### EXAMPLE 2

A texturized protein product was prepared as described in Example 1, except that instead of beetroot juice concentrate coconut concentrate was used.

Peak positive force values were measured for the product, by using the method described elsewhere in this application. The first peak positive force was 5500 - 6000 g, the second peak positive force was 2200 - 2600 g.

A comparative test was made with a commercial beef jerky product. Peak positive force values were measured in the same manner for beef jerky. The first peak positive force was 5000 - 5500 g and the second peak positive force was 2500 - 3000 g.

It can be seen that the textural properties of the product according to invention, which is completely plant-based, are very similar to conventional beef jerky.

Even if the invention was described with reference to what at present seems to be the most practical and preferred embodiments, it is appreciated that the invention shall not be limited to the embodiments described above, but the invention is intended to cover also different modifications and equivalent technical solutions within the scope of the enclosed claims.

## Claims

1. Ready-to-eat texturized protein product, which
- is prepared from legume material comprising legume protein and cereal material comprising bran and cereal protein, excluding wheat,
- comprises parallelly aligned fibres,
- has a moisture content ≤ 45 weight-%, and
- comprises at least 25 weight-% of protein originating from legume material and cereal material, and at most 55 weight-% of carbohydrates, calculated from the total dry mass of the product.

2. Texturized protein product according to claim 1, **characterised in that** the product has a moisture content in the range of 7 - 45 weight-%, preferably 10 - 40 weight-%, more preferably 15 - 35 weight-%, even more preferably 18 - 33 weight-%.

3. Texturized protein product according to claim 1 or 2, **characterised in that** the product comprises 25 - 65 weight-%, preferably 30 - 55 weight-%, more preferably 32 - 52 weight-%, of protein originating from legume material and cereal material, measured by dry weight of the product.

4. Texturized protein product according to claim 1, 2 or 3, **characterised in that** the product comprises 18 - 55 weight-%, preferably 20 - 48 weight-%, more preferably 22 - 45 weight-%, of carbohydrates, measured by dry weight of the product.

5. Texturized protein product according to any of the preceding claims 1 - 4, **characterised in that** the product has a shape, which has a first dimension and a second dimension, which are perpendicular to each other, the first dimension being larger than the second dimension.

6. Texturized protein product according to claim 5, **characterised in that** the first dimension is at least 2 times, preferably at least 4 times, more preferably at least 4.5 times, larger than the second dimension.

7. Texturized protein product according to claim 5 or 6, **characterised in that** the product has
- the first dimension, which is in the range of 2 - 6 cm, preferably 2.5 - 5 cm, more preferably 3 - 4 cm, and/or
- the second dimension, which is in the range of 0.1 - 0.8 cm, preferably 0.2 - 0.7 cm, more preferably 0.3 - 0.6 cm, and/or
- a third dimension, which is perpendicular to the first and the second dimension and which is in the range of 0.8 - 3.5 cm, preferably 1 - 3 cm, more preferably 1.5 - 2 cm.

8. Texturized protein product according to claim 5, 6 or 7, **characterised in that** the fibres are mainly aligned parallel to the first dimension.

9. Texturized protein product according to any of preceding claims 1 - 8, **characterised in that** the product has a first peak positive force value, which is measured perpendicular to the length direction of the fibres, and a second peak positive force value, which is measured parallel to the length direction of the fibres, the first peak positive force value being larger than the second peak positive force value.

10. Texturized protein product according to claim 9, **characterised in that** the ratio of the second peak positive force value to the first peak positive force value is in the range of 20 - 95 %, preferably 30 - 90 %, more preferably 40 - 85 %.

11. Texturized protein product according to claim 9 or 10, **characterised in that** the first peak positive force value is in the range of 2000 - 8000 g, preferably 2500 - 7000 g, more preferably 3500 - 6000 g, and/or the second peak positive force is in the range of 1000 - 5000 g, preferably 1500 - 4000 g, more preferably 2400 - 3500 g.

12. Texturized protein product according to any of the preceding claims 1 - 11, **characterised in that** the product comprises 5 - 40 weight-%, preferably 7 - 34 weight-%, more preferably 9 - 28 weight-%, of lipids, measured by dry weight of the product.

13. Texturized protein product according to any of the preceding claims 1 - 12, **characterised in that** the product comprises dietary fibre in amount of 2 - 15 g, preferably 2.5 - 12g, more preferably 3 - 10 g, and/or beta-glucan in amount of 1 - 5 g, preferably 1.2 - 3.8 g, most preferably 1.5 g - 3.2 g, given per 100 g of dry product.

14. Texturized protein product according to any of the preceding claims 1 - 13, **characterised in that** the product has a water activity in the range of 0.44 - 0.90, preferably 0.50 - 0.87, more preferably 0.57 - 0.83.

15. Texturized protein product according to any of the preceding claims 1 - 14, **characterised in that** the product comprises flavour component originating from fruit and/or vegetable juice and/or fruit and/or vegetable pulp, preferably in amount of 4 - 40 g, more 8 - 35 g, more preferably 9 - 30 g, given per 100 g of dry product.
